# EUROPEAN PATENT APPLICATION

(11) **EP 4 606 202 A1**
(43) Date of publication of application: **27.08.2025**
(21) Application number: 25160345.2
(22) Date of filing: 26.02.2025
(51) Int. Cl.: A01D 34/835, A01D 41/127

(54) **SYSTEM AND METHOD FOR CONTROLLING THE OPERATION OF AN AGRICULTURAL HARVESTER**

(30) Priority: 26.02.2024 US 202418587126
(71) Applicant: CNH Industrial America LLC, New Holland, PA 17557 (US)
(72) Inventor: Romoser, Tyler, New Holland, 17557 (US); Bryan, Alison, New Holland, 17557 (US)
(74) Representative: CNH Industrial IP Department

(57) **Abstract**

A system for controlling the operation of an agricultural harvester includes a residue chopper configured to process crop residue removed from harvested crop material. Additionally, the system includes an actuator configured to control the operation of the residue chopper. Moreover, the system includes a terrain sensor configured to generate data indicative of a topographical parameter of the field. Additionally, the system includes a computing system communicatively coupled to the terrain sensor. The computing system is configured to determine the topographical parameter of the field based on the terrain sensor data and control the operation of the actuator to control the operation of the residue chopper based on the determined topographical parameter of the field.

## Description

### FIELD OF THE INVENTION

The present disclosure generally relates to agricultural harvesters and, more particularly, to systems and methods for controlling the operation of an agricultural harvester.

### BACKGROUND OF THE INVENTION

A harvester is an agricultural machine used to harvest and process crops. For instance, a combine harvester may be used to harvest grain crops, such as wheat, oats, rye, barley, corn, soybeans, and flax or linseed. In general, the objective is to complete several processes, which traditionally were distinct, in one pass of the machine over a portion of the field. In this respect, most harvesters are equipped with a detachable header or harvesting implement, which cuts and collects the crop from the field. The harvester also includes a crop processing system, which performs various processing operations (e.g., threshing, separating, etc.) on the harvested crop received from the harvesting implement. Furthermore, the harvester includes an agricultural storage compartment, such as a crop or grain tank, which receives and stores the harvested crop after processing. Moreover, the harvester includes a residue handling system for chopping and discharging crop residue that is removed/separated from the harvested crop from the harvester.

During harvesting operations, the harvester discharges crop residue from the harvester onto the field surface which often has varying terrain such as hills. The discharged crop residue has often been finely chopped by the residue chopper of the harvester. However, finely chopped residue deposited onto hillsides is prone to be moved away from the hillside due to water erosion, wind, and/or the like. Such movement of the residue leads to loss of valuable topsoil and excessive crop residue deposition in flatter field areas that impedes crop growth in subsequent growing seasons. In this respect, many harvesters include various systems for controlling the operation of an agricultural harvester. While such systems work well, further improvements are needed.

Accordingly, an improved system and method for controlling the operation of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to an agricultural harvester. The agricultural harvester includes a frame and a residue chopper supported by the frame and configured to process crop residue removed from harvested crop material. Furthermore, the agricultural harvester includes a residue spreader supported by the frame and configured to spread the processed crop residue onto the field. Moreover, the agricultural harvester includes an actuator configured to control an operation of the residue chopper. Furthermore, the agricultural harvester includes a terrain sensor configured to generate data indicative of a topographical parameter of the field. Moreover, the agricultural harvester includes a computing system communicatively coupled to the terrain sensor. The computing system is configured to determine the topographical parameter of the field based on the data generated by the terrain sensor. Additionally, the computing system is configured to control an operation of the actuator control the operation of the residue chopper based on the determined topographical parameter of the field.

In another aspect, the present subject matter is directed to a system for controlling the operation of an agricultural harvester. The system includes a residue chopper configured to process crop residue removed from harvested crop material. Additionally, the system includes an actuator configured to control an operation of the residue chopper. Moreover, the system includes a terrain sensor configured to generate data indicative of a topographical parameter of the field. Additionally, the system includes a computing system communicatively coupled to the terrain sensor. The computing system is configured to determine the topographical parameter of the field based on the data generated by the terrain sensor. Furthermore, the computing system is configured to control an operation of the actuator to control the operation of the residue chopper based on the determined topographical parameter of the field.

In another aspect, the present subject matter is directed to a method for controlling the operation of an agricultural harvester. The agricultural harvester includes a residue chopper configured to process crop residue removed from harvested crop material. The method includes receiving, with a computing system, terrain sensor data indicative of a topographical parameter of a field. Furthermore, the method includes determining, with the computing system, the topographical parameter of the field based on the received terrain sensor data. Moreover, the method includes controlling, with the computing system, an operation of an actuator to control an operation of the residue chopper based on the determined topographical parameter of the field.

These and other features, aspects and advantages of the present technology will become better understood with reference to the following description and appended claims. The accompanying drawings illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural vehicle in accordance with aspects of the present subject matter;
FIG. 2 illustrates a schematic view of one embodiment of a system for controlling the operation of an agricultural harvester in accordance with aspects of the present subject matter;
FIG. 3 illustrates a flow diagram of one embodiment of control logic for controlling the operation of an agricultural harvester in accordance with aspects of the present subject matter;
FIG. 4A illustrates a diagrammatic side view of an agricultural harvester in accordance with aspects of the present subject matter, particularly illustrating a pitch angle of the agricultural harvester relative to the field;
FIG. 4B illustrates a diagrammatic rear view of an agricultural harvester in accordance with aspects of the present subject matter, particularly illustrating a roll angle of the agricultural harvester relative to the field;
FIG. 4C illustrates a diagrammatic top view of an agricultural harvester in accordance with aspects of the present subject matter, particularly illustrating a yaw angle of the agricultural harvester relative to the field; and
FIG. 5 illustrates a flow diagram of one embodiment of a method for controlling the operation of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a system and a method for controlling the operation of an agricultural harvester. The agricultural harvester includes a residue chopper configured to process crop residue removed from harvested crop material during, for example, a threshing and separating process. Additionally, the agricultural harvester includes an actuator configured to control the operation of the residue chopper. For example, the actuator may be configured to adjust the operation of the residue chopper between a first setting in which the crop residue is processed into a first size and a second setting in which the crop residue is processed into a second size greater than the first size.

Furthermore, a computing system of the disclosed system is configured to control the operation of the actuator to control the operation of the residue chopper. More specifically, the computing system is configured to receive data from a terrain sensor indicative of one or more topographical parameters of the field. Then, the computing system is configured to determine the topographical parameter(s) of the field based on the received data from the terrain sensor. For example, in several embodiments, the topographical parameter(s) may include one or more field inclination parameter(s), such the pitch, roll, and/or yaw of the harvester relative to the field. Thereafter, the computing system may be configured to control the operation of the actuator to control the operation of the residue chopper based on the determined topographical parameter(s) of the field. For example, in some embodiments, the computing system may be configured to control the operation of the actuator to adjust the operation of the residue chopper between a first setting in which the crop residue is processed to a first size and a second setting in which the crop residue is processed to second size greater than the first size based on the determined field inclination parameter(s). In this respect, the computing system may be configured to compare the determined field inclination parameter(s) to a predetermined parameter threshold range. Then, the computing system may be configured to control the operation of the actuator to adjust the operation of the residue chopper to the second setting when the determined field inclination parameter(s) exceeds the predetermined parameter threshold range and adjust the operation of the residue chopper to the first setting when the determined field inclination parameter(s) equals or falls below the predetermined parameter threshold range.

Automatically controlling the operation of the residue chopper based on topographical parameters of the field improves the operation of the harvester. More specifically, in conventional agricultural harvesters, the operation of the residue chopper may only be manually controlled or controlled by operator input. However, as described above, the disclosed system and method automatically determining the topographical parameter(s) of the field based on terrain sensor data and then automatically controlling the operation of an actuator to control the operation of the residue chopper based on the determined topographical parameter(s) of the field. This, in turn, allows larger sized crop residue to be deposited on hillsides and smaller sized crop material to be deposited on relatively flat surfaces of the field without the operator needing to manually control the residue chopper and/or provide an input to control the residue chopper. The larger sized crop residue is more difficult to be moved away from the hillsides by wind, water erosion, etc. As such, field topsoil loss and excessive crop residue deposits in low-lying/flatter areas of the field are reduced and, thus, promote crop growth. Furthermore, the smaller sized crop residue is more easily mixed with soil and does not interfere with crop growth as much as larger sized crop residue and, thus, is better for relatively flat surfaces of the field.

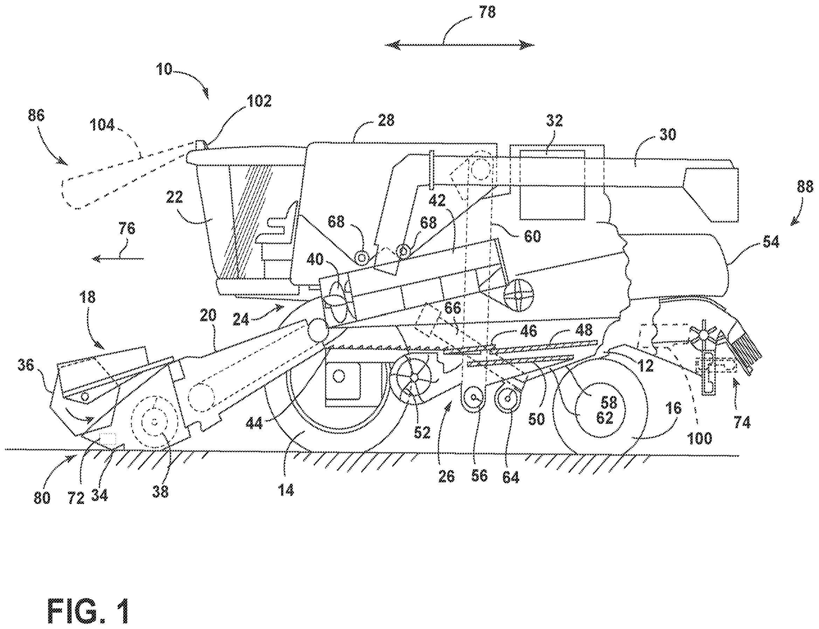

Referring now to the drawings, FIG. 1 illustrates a partial sectional side view of an agricultural harvester 10 in accordance with aspects of the present subject matter. However, it should be appreciated the agricultural vehicle 10 may be configured as any other suitable agricultural vehicle.

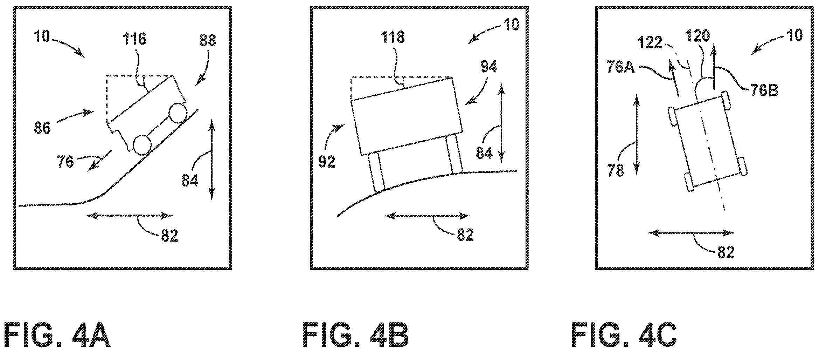

As shown in FIG. 1, the harvester 10 is traversing a field in a direction of travel (as indicated by arrow 76). The harvester 10 extends between a front end 86 and a rear end 88 in a longitudinal direction (as indicated by arrow 78) parallel to the direction of travel 76. Additionally, the harvester 10 extends between a first side 92 and a second side 94 in a lateral direction (as indicated by arrow 82) perpendicular to the longitudinal direction 78 (FIGS. 4B, 4C).

The harvester 10 generally includes a chassis or frame 12, ground engaging wheels 14, 16, a header 18, a feeder housing 20, an operator cab 22, a threshing and separating system 24, a cleaning system 26, a grain tank 28, and an unloading conveyor 30. Unloading conveyor 30 is illustrated as an unloading auger, but can also be configured as a belt conveyor, chain elevator, etc.

The front wheels 14 may be larger flotation type wheels, while the rear wheels 16 may be smaller steerable wheels. Motive force is selectively applied to the front wheels 14 through a power plant in the form of an engine 32 and a transmission (not shown). Although the harvester 10 is shown as including wheels, it is also to be understood that the harvester 10 may include tracks, such as full tracks or half-tracks.

The header 18 is mounted at the front of the harvester 10 and includes a cutting assembly 80. The cutting assembly 80 includes a cutter bar 34 for severing crops from a field during forward motion of harvester 10. The header 18 also includes a residue chopper 72 including one or more blades (not shown) configured to process or chop the severed crops, including the non-grain crop material/crop residue, such as stalks, leaves, and/or the like, into pieces. A rotatable reel 36 feeds the crop into the header 18, and a double auger 38 feeds the severed crop laterally inwardly from each side toward the feeder housing 20. The feeder housing 20 conveys the cut crop to threshing and the separating system 24, and is selectively vertically movable using one or more actuators, such as hydraulic cylinders (not shown).

The threshing and separating system 24 is of the longitudinal orientation type, and generally includes a rotor 40 at least partially enclosed by and rotatable within a corresponding perforated concave 42. The cut crops are threshed and separated by the rotation of the rotor 40 within the concave 42, and larger elements, such as the stalks, leaves and the like are conveyed to a residue spreader 74, as will be described below, to be discharged from the rear of the harvester 10. Smaller elements of crop material including grain and non-grain crop material, including particles lighter than grain, such as chaff, dust and straw, are discharged through perforations of the concave 42.

Grain that has been separated by the threshing and separating system 24 falls onto a grain pan 44 and is conveyed toward the cleaning system 26. The cleaning system 26 may include an optional pre-cleaning sieve 46, an upper sieve 48 (also known as a chaffer sieve), a lower sieve 50 (also known as a cleaning sieve), and a cleaning fan 52. Grain on the sieves 46, 48 and 50 is subjected to a cleaning action by the fan 52, which provides an airflow through the sieves, to remove chaff and other impurities such as dust from the grain by making this material airborne for discharge from the straw hood 54 of the harvester 10. The grain pan 44 and the pre-cleaning sieve 46 oscillate in a fore-to-aft manner to transport the grain and finer non-grain crop material to the upper surface of the upper sieve 48. The upper sieve 48 and the lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of the lower sieve 50. The clean grain auger 56 receives clean grain from each sieve 48, 50 and from bottom pan 58 of the cleaning system 26. The clean grain auger 56 conveys the clean grain laterally to a generally vertically arranged grain elevator 60 for transport to the grain tank 28. Tailings from the cleaning system 26 fall to a tailings auger trough 62. The tailings are transported via tailings auger 64 and the return auger 66 to the upstream end of the cleaning system 26 for repeated cleaning action. The cross augers 68 at the bottom of the grain tank 28 convey the clean grain within the grain tank 28 to the unloading auger 30 for discharge from the harvester 10.

Moreover, one or more actuators 114 of the harvester 10 are provided in operative association with the residue chopper 72 such that the actuator(s) 114 is configured to control an operation of the residue chopper 72. In several embodiments, the actuator(s) 114 may be configured to adjust the operation of the residue chopper 72 between a first setting, in which the crop residue is processed to a first size, and a second setting, in which the crop residue is processed to a second size greater/larger than the first size. For example, a shifting assembly 100 of the harvester 10 may be coupled to the residue chopper 72, for example, by an output shaft (not shown), and configured to transfer power from a power source, such as the engine 32 or a motor (not shown), to the residue chopper 72. The actuator(s) 114 may be coupled to one or more components of the shifting assembly 100, such as a set of interlocking gears (not shown) that the actuator(s) 114 may be configured to adjust between first and second speed ratios corresponding to the first and second settings of the residue chopper 72, respectively. The speed ratios may control the speed applied by the shifting assembly 100 to the residue chopper 72. In this respect, the actuator(s) 114 may be configured to control the speed that blades (not shown) of the residue chopper 72 process the crop residue according to the setting of the residue chopper 72 and, thus, controlling the size into which the crop residue is processed.

Additionally, the actuator(s) 114 may correspond to a fluid-filled actuator(s) such as a hydraulic or pneumatic actuator(s). However, it should be appreciated that the actuator(s) 114 may correspond to any suitable actuator(s) configured to control the operation of the residue chopper 72.

Furthermore, the residue chopper 72 may be associated with the residue spreader 74. As is generally understood, the residue spreader 74 may include one or more spreader elements (not shown), such as one or more rotating, paddled wheels, for spreading the crop residue discharged at the rear end of the harvester 10. The residue spreader 74 receives a stream of crop residue from the cleaning system 26. The residue spreader 74 discharges the non-grain crop material/crop residue across the harvested width behind the harvester 10. Such crop residue is discharged on the field surface/ground. The size into which the crop residue is processed can be controlled to ensure proper crop residue coverage of the field.

The configuration of the harvester 10 described above and shown in FIG. 1 is provided only to place the present subject matter in an exemplary field of use. Thus, the present subject matter may be readily adaptable to any manner of harvester configuration.

Furthermore, the harvester 10 may include one or more terrain sensors 102 coupled thereto and/or supported thereon. The terrain sensor(s) 102 is configured to generate data indicative of one or more topographical parameters of the field across which the harvester 10 is traversing. As will be described below, such data may subsequently be used to control the operation of the residue chopper 72.

In general, the terrain sensor(s) 102 may correspond to any suitable sensor(s) configured to generate data indicative of the topographical parameter(s) of the field. In several embodiments, the terrain sensor(s) 102 may be configured as a vehicle-orientation or tilt sensor(s), such as an inclinometer(s), gyroscope(s), and/or the like. In alternative embodiments, the terrain sensor(s) 102 may be configured as an imaging device(s), such as a light detection and ranging (LiDAR), camera(s), and/or the like configured to depict a portion of the field within a field(s) of view 104 of the terrain sensor(s) 102. Furthermore, in alternative embodiments, the terrain sensor(s) 102 may be configured as any other suitable sensor(s) for generating data indicative of the topographical parameter(s) of the field. For example, the terrain sensor(s) 102 may be configured as a location sensor(s), such as a global positioning system(s) (GPS) or other GNSS-based sensor(s). As such, the terrain sensor(s) 102 may track a position of the harvester 10 as the harvester 10 travels across the field and, thus, generate data indicative of the topographical parameter(s) of the field.

Furthermore, the harvester 10 may include any number of terrain sensors 102 provided at any suitable location that allows data indicative of the topographical parameter(s) of the field to be generated. In this respect, FIG. 1 illustrates an example location for mounting the terrain sensor(s) 102 for generating data indicative of the topographical parameter(s) of the field. For example, in embodiments in which the terrain sensor(s) 102 is configured as an imaging device(s), the terrain sensor(s) 102 may be mounted on the operator cab 22 of the harvester 10 such that the terrain sensor(s) 102 has the field(s) of view 104 directed forward of the of the harvester 10. However, in alternative embodiments, the terrain sensor(s) 102 may be installed at any other suitable location(s) that allows the device(s) to generate data indicative of the topographical parameter(s) of the field.

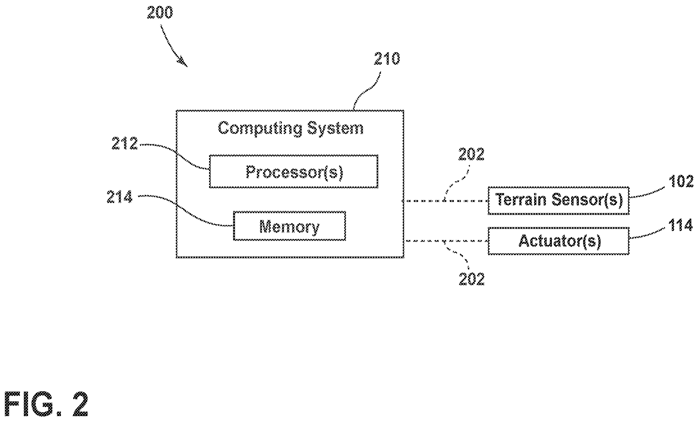

Referring now to FIG. 2, a schematic view of one embodiment of a system 200 for controlling the operation of an agricultural harvester is illustrated in accordance with aspects of the present subject matter. In general, the system 200 will be described herein with reference to the agricultural harvester 10 described above with reference to FIG. 1. However, the disclosed system 200 may generally be utilized with agricultural harvesters having any other suitable harvester configuration.

As shown in FIG. 2, the system 200 generally includes one or more components of the harvester 10. For example, in the illustrated embodiment, the system 200 includes the actuator(s) 114 and the terrain sensor(s) 102 of the harvester 10.

Moreover, the system 200 includes a computing system 210 communicatively coupled to one or more components of the harvester 10 and/or the system 200 to allow the operation of such components to be electronically or automatically controlled by the computing system 210. For instance, the computing system 210 may be communicatively coupled to the terrain sensor(s) 102 via a communicative link 202. As such, the computing system 210 may be configured to receive data from the terrain sensor(s) 102 that is indicative of the topographical parameter(s) of the field through which the harvester 10 is traversing. Additionally, the computing system 210 may be communicatively coupled to the actuator(s) 114 via the communicative link 202. In this respect, the computing system 210 may be configured to control the operation of the actuator(s) 114. In addition, the computing system 210 may be communicatively coupled to any other suitable components of the harvester 10 and/or the system 200.

In general, the computing system 210 may include any suitable processor-based device known in the art, such as a given controller or computing device or any suitable combination of controllers or computing devices. Thus, in several embodiments, the computing system 210 may include one or more processor(s) 212 and associated memory device(s) 214 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 214 of the computing system 210 may generally comprise memory element(s) including, but not limited to, a computer readable medium (e.g., random access memory (RAM)), a computer readable non-volatile medium (e.g., a flash memory), a floppy disc, a compact disc-read only memory (CD-ROM), a magneto-optical disc (MOD), a digital versatile disc (DVD), and/or other suitable memory elements. Such memory device(s) 214 may generally be configured to store suitable computer-readable instructions that, when implemented by the processor(s) 212, configure the computing system 210 to perform various computer-implemented functions, such as one or more aspects of the methods and algorithms that will be described herein. In addition, the computing system 210 may also include various other suitable components, such as a communications circuit or module, one or more input/output channels, a data/control bus and/or the like.

It should be appreciated that the computing system 210 may correspond to an existing computing system(s) of the harvester 10, itself, or the computing system 210 may correspond to a separate processing device. For instance, in one embodiment, the computing system 210 may form all or part of a separate plug-in module that may be installed in association with the harvester 10 to allow for the disclosed systems to be implemented without requiring additional software to be uploaded onto existing control devices of the harvester 10.

Furthermore, it should also be appreciated that the functions of the computing system 210 may be performed by a single processor-based device or may be distributed across any number of processor-based devices, in which instance such devices may be considered to form part of the computing system 210. For instance, the functions of the computing system 210 may be distributed across multiple application-specific controllers or computing devices, such as a navigation controller, an engine computing controller, a transmission controller, an implement controller and/or the like.

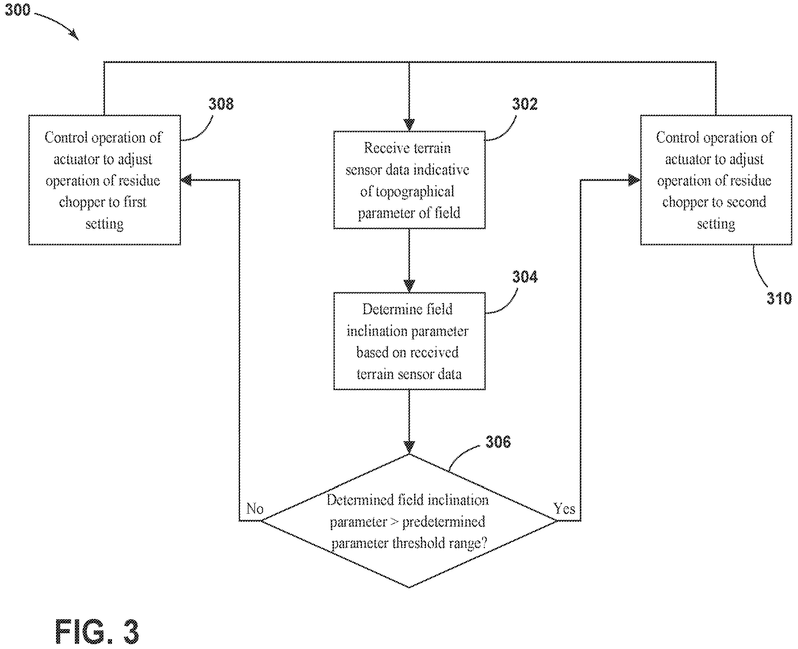

Referring now to FIG. 3, a flow diagram of one embodiment of control logic 300 that may be executed by the computing system 210 (or any other suitable computing system) for controlling the operation of an agricultural harvester is illustrated in accordance with aspects of the present subject matter. Specifically, the control logic 300 shown in FIG. 3 is representative of steps of one embodiment of an algorithm that can be executed to control the operation of the agricultural harvester 10 to adjust the size of the crop residue to be discharged from the agricultural harvester 10 based on topographical parameters of the field. Thus, in several embodiments, the control logic 300 may be advantageously utilized in association with a system installed on or forming part of an agricultural harvester to allow for real-time control of the agricultural harvester without requiring substantial computing resources and/or processing time. However, in other embodiments, the control logic 300 may be used in association with any other suitable system, application, and/or the like for controlling the operation of an agricultural harvester.

As shown in FIG. 3, at (302), the control logic 300 includes receiving terrain sensor data indicative of a topographical parameter of the field. Specifically, as mentioned above, in several embodiments, the computing system 210 is communicatively coupled to the terrain sensor(s) 102 via the communicative link 202. In this respect, as the agricultural harvester 10 travels across a field to perform a harvesting operation thereon, the computing system 210 may be configured to receive data from the terrain sensor(s) 102 indicative of the topographical parameter(s) of the field.

Moreover, at (304), the control logic 300 includes determining a field inclination parameter based on the received terrain sensor data. Specifically, in several embodiments, the computing system 210 may be configured to determine the field inclination parameter(s) based on the terrain sensor data received at (302). For example, the computing system 210 may access a look-up table(s) stored within its memory device(s) 214 that correlates the terrain sensor data received at (302) to the field inclination parameter(s). As will be described below, such field inclination parameter(s), in turn, are used to control the operation of the residue chopper 72.

In several embodiments, when determining the field inclination parameter(s), the computing system 210 may be configured to determine a pitch of the agricultural harvester 10 relative to the field. For example, the harvester 10 may be positioned on a hillside on one or more occasions during the harvesting operation. As shown in FIG. 4A, a pitch angle 116 is defined between the front end 86 and the rear end 88 of the harvester 10. The pitch angle 116 may be defined such that the front end 86 of the harvester 10 is elevated relative to the rear end 88 of the harvester 10 in a vertical direction (as indicated by arrow 84) perpendicular to the direction of travel 76 of the harvester 10, or vice versa. In this respect, the computing system 210 may be configured to determine the pitch angle 116 of the harvester 10 relative to the field.

Additionally, or alternatively, in several embodiments, when determining the field inclination parameter(s), the computing system 210 may be configured to determine a roll of the agricultural harvester 10 relative to the field. For example, as shown in FIG. 4B, a roll angle 118 is defined between the first side 92 and the second side 94 of the harvester 10. The roll angle 118 may be defined such that the first side 92 of the harvester 10 is elevated relative to the second side 94 of the harvester 10 in the vertical direction 84, or vice versa. In this respect, the computing system 210 may be configured to determine the roll angle 118 of the harvester 10 relative to the field.

Additionally, or alternatively, in several embodiments, when determining the field inclination parameter(s), the computing system 210 may be configured to determine a yaw of the agricultural harvester 10 relative to the field. For example, as shown in FIG. 4C, a yaw angle 120 is defined between a longitudinal centerline 122 parallel to a current direction of travel 76A of the harvester 10 and a former direction of travel 76B. In this respect, the computing system 210 may be configured to determine the yaw angle 120 of the harvester 10 relative to the field.

Additionally, at (306), the control logic 300 includes comparing the determined field inclination parameter to a predetermined parameter threshold range. Specifically, in several embodiments, the computing system 210 is configured to compare the field inclination parameter(s) determined at (304) to the predetermined parameter threshold range. The predetermined parameter threshold range may correspond a range of values (e.g., pitch angle 116, roll angle 118, and/or yaw angle 120) within or below which would less likely result in crop residue being moved by elements such as wind, water erosion, and/or the like. When the field inclination parameter(s) determined at (304) is equal to or falls below a minimum value of the predetermined parameter threshold range, the operation of the actuator(s) 114 may be controlled to adjust the operation of the residue chopper 72 to the first setting so that the residue chopper 72 processes the crop residue to the first size. In such instances, the control logic 300 proceeds to (308). Conversely, when the field inclination parameter(s) determined at (304) exceeds a maximum value of the predetermined parameter threshold range, the operation of the actuator(s) 114 may be controlled to adjust the operation of the residue chopper to the second setting so that the residue chopper 72 processes the crop residue to the second size, which is greater than the first size. In such instance, the control logic 300 proceeds to (310).

Furthermore, as shown in FIG. 3, at (308), the control logic 300 includes controlling the operation of the actuator to adjust the operation of the residue chopper to the first setting. Specifically, as mentioned above, in several embodiments, the computing system 210 is communicatively coupled to the actuator(s) 114 via the communicative link 202. As such, the computing system 210 is configured to control the operation of the actuator(s) 114 to adjust the operation of the residue chopper 72 to the first setting when the field inclination parameter(s) determined at (304) equals or falls below the predetermined parameter threshold range. Thereafter, the control logic 300 returns to (302).

Additionally, at (310), the control logic 300 includes controlling the operation of the actuator to adjust the operation of the residue chopper to the second setting. Specifically, in several embodiments, the computing system 210 is configured to control the operation of the actuator(s) 114 to adjust the operation of the residue chopper 72 to the second setting when the field inclination parameter(s) determined at (304) exceeds the predetermined parameter threshold range. Thereafter, the control logic 300 returns to (302).

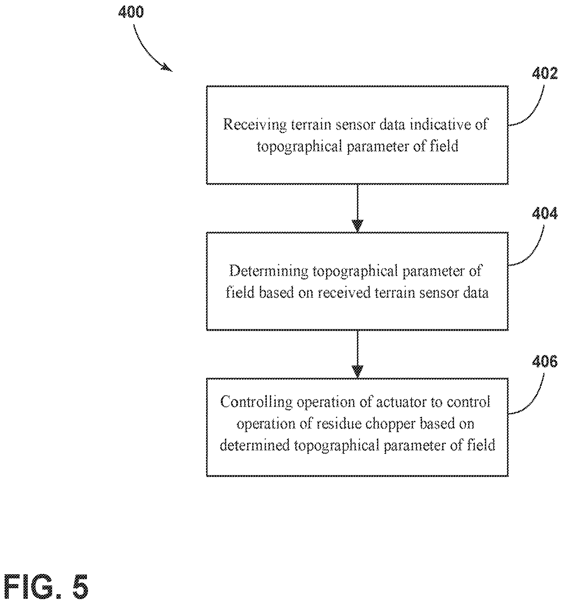

Referring now to FIG. 5, a flow diagram of one embodiment of a method 400 for controlling the operation of an agricultural harvester is illustrated in accordance with aspects of the present subject matter. In general, the method 400 will be described herein with reference to the agricultural harvester 10 and the system 200 described above with reference to FIGS. 1-4C. However, it should be appreciated by those of ordinary skill in the art that the disclosed method 400 may generally be implemented with any agricultural harvesters having any suitable harvester configuration and/or within any system having any suitable system configuration. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 5, at (402), the method 400 includes receiving, with a computing system, terrain sensor data indicative of a topographical parameter of a field. For instance, as described above, the computing system 210 may be configured to receive terrain sensor data indicative of the topographical parameter(s) of the field.

Furthermore, at (404), the method 400 includes determining, with the computing system, the topographical parameter of the field based on the received terrain sensor data. For instance, as described above, the computing system 210 may be configured to determine the topographical parameter(s) of the field based on the received terrain sensor data.

Moreover, at (406), the method 400 includes controlling, with the computing system, an operation of an actuator to control an operation of a residue chopper based on the determined topographical parameter of the field. For instance, as described above, the computing system 210 may be configured to control the operation of the actuator(s) 114 to control the operation of the residue chopper 72 based on the determined topographical parameter(s) of the field.

It is to be understood that the steps of the control logic 300 and the method 400 are performed by the computing system 210 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 210 described herein, such as the control logic 300 and the method 400, is implemented in software code or instructions which are tangibly stored on a tangible computer readable medium. The computing system 210 loads the software code or instructions via a direct interface with the computer readable medium or via a wired and/or wireless network. Upon loading and executing such software code or instructions by the computing system 210, the computing system 210 may perform any of the functionality of the computing system 210 described herein, including any steps of the control logic 300 and the method 400 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

## Claims

1. A system (200) for controlling the operation of an agricultural harvester (10), the system (200) including a residue chopper (72) configured to process crop residue from harvested crop material and an actuator (114) configured to control an operation of the residue chopper (72), the system (200) further including a terrain sensor (102) configured to generate data indicative of a topographical parameter of the field, and a computing system (210) communicatively coupled to the terrain sensor (102), the system (200) **characterized by** the computing system (210) being configured to:
determine the topographical parameter of the field based on the data generated by the terrain sensor (102); and
control an operation of the actuator (114) to control the operation of the residue chopper (72) based on the determined topographical parameter of the field.

2. The system (200) as in claim 2, wherein, when controlling the operation of the residue chopper (72), the actuator (114) is configured to:
adjust the operation of the residue chopper (72) between a first setting in which the crop residue is processed into a first size and a second setting in which the crop residue is processed into a second size greater than the first size based on the determined topographical parameter of the field.

3. The system (200) as in any of claims 1 or 2, wherein:
when determining the topographical parameter of the field, the computing system (210) is configured to determine a field inclination parameter; and
when controlling the operation of the actuator (114), the computing system (210) is configured to control the operation of the actuator (114) to adjust the operation of the residue chopper (72) between the first setting and the second setting based on the determined field inclination parameter.

4. The system (200) as in claim 3, wherein, when controlling the operation of the actuator (114), the computing system (210) is configured to:
compare the determined field inclination parameter to a predetermined parameter threshold range; and
control the operation of the actuator (114) to adjust the operation of the residue chopper (72) to the second setting when the determined field inclination parameter exceeds a maximum value of the predetermined parameter threshold range.

5. The system (200) as in claim 3 and/or 4, wherein, when controlling the operation of the actuator (114), the computing system (210) is configured to:
compare the determined field inclination parameter to a predetermined parameter threshold range; and
control the operation of the actuator (114) to adjust the operation of the residue chopper (72) to the first setting when the determined field inclination parameter equals or falls below a minimum value of the predetermined parameter threshold range.

6. The system (200) as in any of claims 3 through 5, wherein:
when determining the field inclination parameter, the computing system (210) is configured to determine a pitch of the agricultural harvester (10) relative to the field; and
when controlling the operation of the actuator (114), the computing system (210) is configured to control the operation of the actuator (114) to control the operation of the residue chopper (72) based on the determined pitch.

7. The system (200) as in any of claims 3 through 6, wherein:
when determining the field inclination parameter, the computing system (210) is configured to determine a roll of the agricultural harvester (10) relative to the field; and
when controlling the operation of the actuator (114), the computing system (210) is configured to control the operation of the actuator (114) to control the operation of the residue chopper (72) based on the determined roll.

8. The system (200) as in any of claims 3 through 7, wherein:
when determining the field inclination parameter, the computing system (210) is configured to determine a yaw of the agricultural harvester (10) relative to the field; and
when controlling the operation of the actuator (114), the computing system (210) is configured to control the operation of the actuator (114) to control the operation of the residue chopper (72) based on the determined yaw.

9. The system (200) as in any of claims 1 through 8, wherein the terrain sensor (102) is configured as an inclinometer.

10. The system (200) as in any of claims 1 through 8, wherein the terrain sensor (102) is configured as a global navigation satellite system (GNSS) based sensor.

11. A method (400) for controlling the operation of an agricultural harvester (10), the agricultural harvester (10) including a residue chopper (72) configured to process crop residue removed from harvester crop material, the method (400) being **characterized by**:
receiving, with a computing system (210), terrain sensor data indicative of a topographical parameter of a field;
determining, with the computing system (210), the topographical parameter of the field based on the received terrain sensor data; and
control an operation of an actuator (114) to control an operation of the residue chopper (72) based on the determined topographical parameter of the field.

12. The method (400) as in claim 11, when controlling the operation of the actuator (114), the method (400) comprises:
controlling, with the computing system (210), the operation of the actuator (114) to adjust the operation of the residue chopper (72) between a first setting in which the crop residue is processed into a first size and a second setting which the crop residue is processed into a second size greater than the first size based on the determined topographical parameter of the field.

13. The method (400) as in any of claims 11 or 12, wherein:
when determining the topographical parameter of the field, the method (400) comprises determining, with the computing system (210), a field inclination parameter; and
when controlling the operation of the actuator (114), the method (400) comprises controlling, with the computing system (210), the operation of the actuator (114) to adjust the operation of the residue chopper (72) between the first setting and the second setting based on the determined field inclination parameter.

14. The method (400) as in any of claim 13, wherein, when controlling the operation of the actuator (114), the method (400) comprises:
comparing, with the computing system (210), the determined field inclination parameter to a predetermined parameter threshold range; and
controlling, with the computing system (210), the operation of the actuator (114) to adjust the operation of the residue chopper (72) to the second setting when the determined field inclination parameter exceeds a maximum value of the predetermined parameter threshold range.

15. The method (400) as in claim 13 and/or 14, wherein, when controlling the operation of the actuator (114), the method (400) comprises
comparing, with the computing system (210), the determined field inclination parameter to a predetermined parameter threshold range; and
controlling, with the computing system (210), the operation of the actuator (114) to adjust the operation of the residue chopper (72) to the first setting when the determined field inclination parameter equals or falls below a minimum value of the predetermined parameter threshold range.
